# EUROPEAN PATENT APPLICATION

(11) **EP 3 272 209 A1**
(43) Date of publication of application: **24.01.2018**
(21) Application number: 17171259.9
(22) Date of filing: 16.05.2017
(51) Int. Cl.: A01G 17/06

(54) **SPACER FOR THE MECHANIZATION OF A VINEYARD AND SPACER-POST ASSEMBLY**

(30) Priority: 22.07.2016 ES 201631008
(71) Applicant: Desarrollos y Suministros Arborea. S.L., 26360 Fuenmayor (La Rioja) (ES); Muelles Crom, S.A., 08400 Granollers (Barcelona) (ES)
(72) Inventor: TORRECILLA SAINZ, Jose, 26360 Fuenmayor (La Rioja) (ES); SANTOLAYA SANTOLAYA, Javier, 26360 Fuenmayor (La Rioja) (ES); CALLEJON FONT, Luis, 08400 Granollers (Barcelona) (ES)
(74) Representative: Ungria López, Javier

(57) **Abstract**

A fork (1) for the mechanization of a vineyard, which is introduced inside a hollow post (7), with a general C-shape, the fork comprising a central body (3) composed of two wings (4) and a core (5), and, attached to said central body, two arms (2) extending at a ß angle with respect to the wings, where the arms terminate in curled ends (6) that clip the longitudinal edge (9) of the post from the inner part towards the outer part; the wings have an inverted tapered shape and form an µ angle therebetween; each end (6) comprises a curved section formed by a first portion and a second portion attached to each other, where the first portion is an extension of the arm and the second portion comprises, in its final end, a curl-shaped curved portion; where in a closing position of the fork, the arms are housed inside of the post.

## Description

### OBJECT OF THE INVENTION

The object of the present invention refers to a fork for the mechanization of a vineyard and to the fork-post assembly, within the field of accessories used to support the cables guiding the canes in the growing of trellis vines.

### TECHNICAL PROBLEM TO ADDRESS AND BACKGROUND OF THE INVENTION

Currently, the growing of vines by means of aerial bars that allow the fastening of canes is a widespread technique. For such purpose, it is essential to mount the bars along the vine rows such that the canes may be fastened thereto, which are then placed in a linear position creating an aerial plane, in the direction of the vine rows, easily accesible for their maintenance and subsequent harvesting. There are basically two types of supports for these bars: metallic posts or wooden posts with clamps nailed thereto. The second systems used have the disadvantage that the metallic clamps deteriorate easily, also leading to the deterioration of the post or stake used, apart from the fact that they may break easily because they do not withstand the vibrations generated during the mechanization, both of the pre-pruning and the harvesting. Therefore, nowadays, the use of the metallic post is widespread, the inside of which contains a cooperating fork press-fitted to the post and whose ends support the wires where the green shoots or future canes rest and are guided.

The metallic post is a C-shaped profile, and the forks are varied, and different configurations are known in the art, but none of the above foresees the characteristics of the improved fork which is the object of the present invention.

Thus, utility model ES 1009685 describes a rod that is press-fitted onto the post with, at least, one twist in the shape of an adjustable spring that clips the diameter of the post on its outer part. This applies in particular to wooden posts.

Patent ES2388229 shows a fork comprising a metallic thread defined by a sharp portion from which two considerably straight arms diverging therebetween spring; each of the arms ending in a loop that terminates in a hook-like fold. The sharp portion is provided with an ear on each of its sides, said sharp portion being on a parallel plane with respect to the arms. This applies in particular to metallic posts with parallel orifices.

Utility model ES1083979 describes a fork comprising three consecutive elastic helicoids (torsion spring) with one or several curls each. Two of them, of similar dimensions, are located in the ends and continue through the arms, and are attached to a central helicoid of precise dimensions to be housed inside the C-shaped metallic post. This last model belongs to the same applicant, but does not solve the problem arising from the forks being incapable of displacing correctly throughout the inside surface of the post since the arms of the fork remain outside the post. In addition, the manufacture of the central body is extremely complex when compared with the simplicity of the new improved fork.

The fork for the mechanization of a vineyard which is the object of the invention includes remarkable improvements as compared with the rest of the conventional forks and a simple and effective solution has been found to overcome the previously described difficulties and disadvantages of the forks known in the state of the art.

### DESCRIPTION OF THE INVENTION

The present invention refers to an improved spring-type fork for opening and closing guide threads in the growing of trellis vines. The growing of vines with trellis systems comprises guiding the green shoots of the vines by means of horizontal wire threads supported by vertical posts placed in alignment with the vines.

This fork is introduced inside of the post and needs to have enough stress in its central body for the fastening to be sufficiently strong and, at the same time, for it to be manually displaced through the inside of the post from the base to the upper end. By enabling the displacement, two of the four guides used to trellis the plants may be suppressed, with the resulting savings this entails.

The fork, manufactured with a single rod made of rigid material, preferably steel, comprises a central body composed of two wings and a core and, attached to said central body, two arms extending at a ß angle ranging from 94 to 98 degrees, preferably 96 degrees, with respect to the wings, where the arms terminate in curled ends; the wings have an inverted tapered configuration and form an µ angle therebetween, ranging from 20 to 25 degrees, preferably 25 degrees; the ends are configured to clip the longitudinal edge of the post from the inner part towards the outer part thereof; each end comprises a curved section formed by a first portion and a second portion attached to each other, where the first portion is an extension of the arm and the second portion comprises, in its final end, a curl-shaped curved portion; where the fork is configured to be placed inside of the post, such that in a closing position of the fork, and, therefore, of the guide threads, the arms of the fork are housed inside of the post.

The first portion forms an α angle with respect to the arm, α being a value ranging from 75 to 85 degrees, preferably 80 degrees.

The central body is contained in a plane and the arms are separated with respect to this plane at a δ angle with a value ranging from 5 to 10 degrees, preferably 5 degrees.

The core comprises two straight sections forming a V, and the inner angle Φ formed between the wing and one of the sections of the core has a value ranging from 123 to 127 degrees, preferably 125 degrees.

In one form of embodiment, the length of the two wings is not the same on both sides, whereas in another form of embodiment, the length of the two wings is the same indeed.

Another object of the invention refers to a fork-post assembly, where the post is a hollow post, with a general C shape, made of a metallic sheet, composed of several longitudinal folds and without orifices distributed in its surface.

### BRIEF DESCRIPTION OF THE FIGURES

To complete the description and in order to give a better understanding of the characteristics of the invention, this descriptive report is accompanied by a series of drawings that are an integral part of the report, wherein, for illustration purposes and without limitation, the following has been represented:
Figure 1 shows a plane, elevation and profile view of the fork which is the object of the invention.

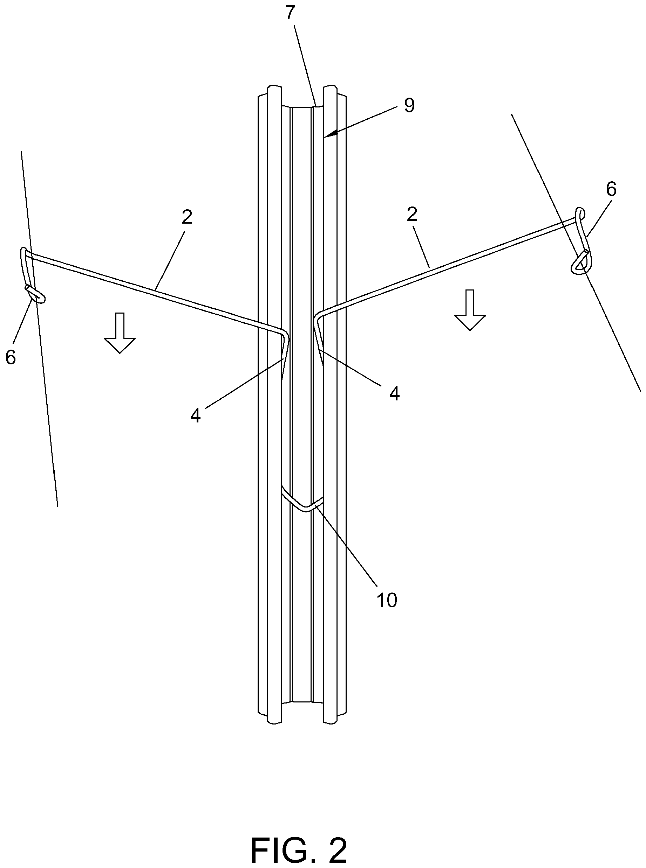

Figure 2 shows the fork-post assembly where the fork is inside of the post, in an open position, with the arms spread out and supporting the cables. The arrows indicate the possibility of moving the fork upwards and downwards inside the post.
Figure 3 shows the fork-post assembly, where the fork is inside the post, in a closed position, with the arms folded, which remain fully inside the metallic post.

A list of the different components that have been represented in the figures and which are comprised in the invention is detailed below:
1. Fork.
2. Arms of the fork.
3. Central body of the fork.
4. Wings of the fork.
5. Core of the fork.
6. Ends of the fork.
7. Post.
8. Longitudinal folds of the post.
9. Longitudinal edge of the post.
10. Straight sections.
11. Curved section.
12. First portion.
13. Second portion with final curled end.
α: 80 degrees ± 5 degrees.
µ: 25 degrees ± 5 degrees.
ß: 96 degrees ± 2 degrees.
Φ: 125 degrees ± 2 degrees.
δ: 5 - 10 degrees.
λ: 25 degrees ± 10 degrees.
Σ: 30 - 40 degrees.

### DETAILED DESCRIPTION

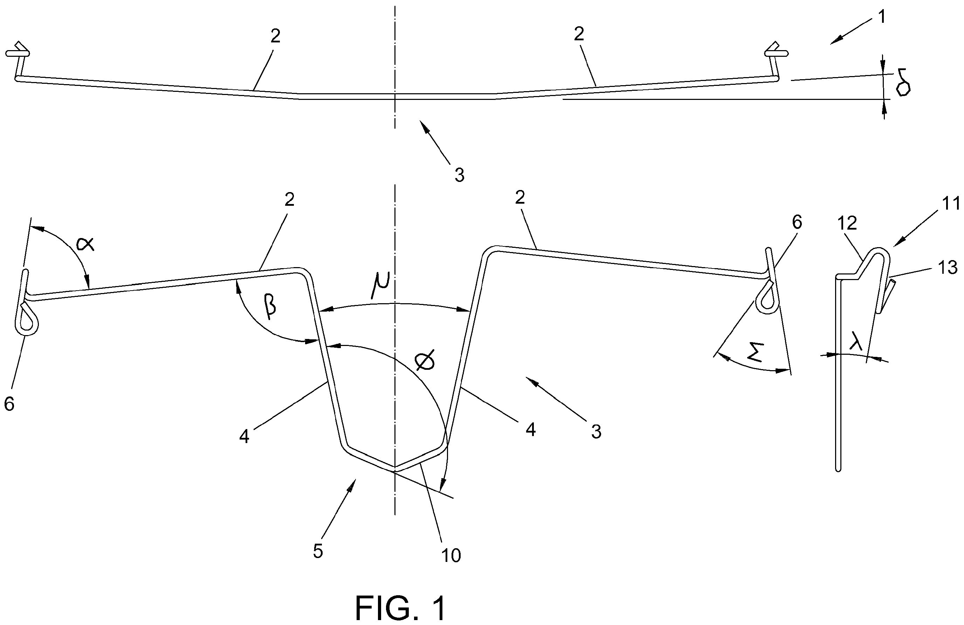

The fork (1) which is the object of the invention is manufactured with a single rod or thread of any rigid material (preferably steel), and comprises, as shown in Figure 1, a central body (3) composed of two wings (4) and a core (5), said central body (3) having two arms (2) attached which extend at a ß angle, respectively, from the wings (4), ß being of approximately 96 degrees ± 2 degrees, that is, within a range from 94 to 98 degrees, preferably 96 degrees, therefore, the wings (4) act as a connection between the core (5) and the above-mentioned arms (2). In turn, the arms (2) terminate in curled-shaped ends (6).

In the elevation view of Figure 1, it may be observed how the wings (4) have an inverted tapered configuration (the upper part being wider than the lower part) and how they form an µ angle therebetween with a value ranging from 20 to 30 degrees approximately, preferably 25 degrees. It is also observed that the length of the wings (4) is not the same for both sides, the right wing (4) being slightly longer. The core (5) is in turn composed of two straight sections (10) forming a V.

The inner angle ϕ formed between the wing (4) and one of the sections (10) of the core (5) has a value ranging from 123 to 127 degrees approximately, preferably 125 degrees.

This new design of the central body (3) results in the fork (1) exerting more pressure on the sides of the metallic post (7) and preventing it from sliding downwards when used in posts without orifices, in particular as the size and weight of the green shoots grows.

In another form of embodiment (not shown), the length of the wings (4) is indeed the same on both sides.

Each end (6) comprises a curved section (11), which clips the longitudinal edge (9) of the post (7), said curved section (11) being formed by a first portion (12) and a second portion (13) both attached to each other, where the first portion (12) is an extension of the arm (2) and the second portion (13) comprises,in its final end, a curl-shaped curved portion, with the precise dimensions for the guide threads to be tied thereto, and where the first portion (12) forms an α angle with respect to the arm (2), α being a value ranging from 75 to 85 degrees, preferably 80 degrees.

In the plane view of Figure 1, it may be observed that the central body (3) is contained in a single plane and how the arms (2) are separated with respect to this plane of the central body (3) at an angle δ ranging from 5 to 10 degrees approximately.

In addition, this new geometry of the ends (6) allows, in practice, to pull out coiled tendrils more easily.

It should be noted that, due to the new design of these ends (6), the post (7) does not require orifices distributed throughout its surface to couple said ends (6), thus entailing significant savings, since the manufacture of posts with orifices is a longer and more expensive process. However, it is possible to re-use old posts that include orifices, since these posts are perfectly compatible with this new fork (1), and do not interfere with its normal operation. Therefore, this new fork (1) is useful both for metallic posts with orifices (regularly distributed on its surface or not) and metallic posts without orifices.

Preferably, the posts (7) are metallic and without orifices, of formed metallic sheet, and C-shaped. In addition, the posts (7) comprise longitudinal folds (8) in their inside that provide rigidity to the post (7) and which act as a rail for the core (5) and the wings (4), thus favouring the displacement of the fork (1).

It should be taken into account that, since the posts may be used without orifices, the displacement of the fork (1) improves substantially, since as the green shoot grows, the tendrils are coiled to the wire ends (6) and to the orifices of the post (7), and it is very difficult to pull out these tendrils from the orifices of the post (7), thus making the displacement of the fork (1) very hard or even impossible.

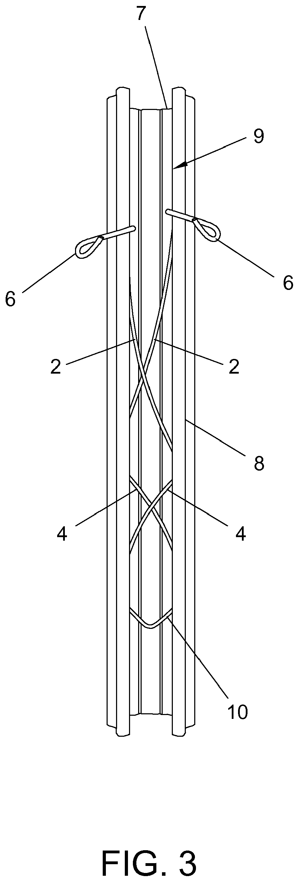

In Figure 3, it may be observed how the curled ends (6) that tie the guide threads do not need orifices of the metallic post (7) to coil onto, unlike those of the state of the art, which are indeed necessary.

The fork (1) has two working positions: an open position or a closed position, with respect to the fastening of the wires arranged on each side of the post (7) and with respect to the post (7) itself.

To introduce the fork (1) in the post (7) the two arms need to be attached (2) to each other, where upon introducing the central body (3) inside of the post (7) through the opening on the upper end, the wings (4) have come closer to each other, leaving the arms (2) spread outwards from the post (7) arranged to support the guide threads.

In the open position, the arms (2) are extended such that, when the foliage begins to grow, the guide threads are separated and, later, in the closed position the plants are followed-up from the beginning up to the end of the post (7) where the threads may be tied and the foliage may be kept closed. This closed position, due to the new configuration of the fork (1), allows the performance and safety of the mechanical work to be enhanced, especially during pre-pruning and mechanical grape harvesting tasks.

In the open position, once the fork (1) is inside of the post (7) and with the arms (2) protruding through the open part of the post (7), the fork (1) may be displaced manually upwards and downwards simply by pulling the ends (6) corresponding to the arms (2), joining them and guiding the fork (1) through the inside of the longitudinal folds (8) configuring the C-shaped post (7). The central body (3) is bent and runs facilitating the displacement through the longitudinal folds (8). The arms (2) form, with respect to the central body (3), the necessary angle so that, in the open position, they separate effectively the guide threads and, in turn, facilitate their displacement through the outside thereof through the hole of the post (7).

When it is necessary to shift to the closed position and the related guide wires are moved to said closed position, this will entail the full insertion of the arms (2) inside of the metallic post (7), thus facilitating the mechanization process (wine harvest and pre-pruning). It is worth remembering that in the state of the art, in the closed position, the arms (2) of the fork (1) are left outside the post (7) in order to couple the ends (6) to the orifices of the post (7), whereas with this new fork (1) the arms (2) are prevented from protruding from the post (7), the latter being completely housed inside the metallic post (7).

Mechanization in the wine harvest stage causes the metallic post (7) to shake; therefore, any external obstacle that said post (7) may have contributes to damaging or even breaking the fork (1). The same happens with the mechanization in the pre-pruning stage, since any obstacle outside the post (7) may be torn or broken by the metallic discs used for said work.

Once the fork (1) is in closed position, with this new geometry of the ends (6), the intention is that, said ends (6), specifically the second portions with final curled end, which are left outside the post (7), tend to remain in horizontal position (with respect to the ground) along with the wire, since it facilitates mechanization even more, mainly avoiding ruptures and snags. It is to be taken into account that if the ends (6) are not in the appropriate position, the discs used in the pre-pruning mechanization may cut the fastening wires of the canes.

The present invention is not limited by the embodiment disclosed herein. Other embodiments can be made by persons skilled in the art in light of this description. In consequence, the scope of the invention is defined by the following claims.

## Claims

1. A fork (1) for the mechanization of a vineyard for opening and closing guide wires in the growing of trellis vines, of the type that is introduced inside of a hollow post (7) with a general C shape, **characterized in that** the fork (1) comprises:
- a central body (3) composed of two wings (4) and a core (5), said central body (3) having two arms (2) attached which extend at a ß angle with respect to the wings (4), where the arms (2) terminate in curled ends (6),
- the wings (4) have an inverted tapered configuration and form an µ angle therebetween,
- the ends (6) are configured to clip the longitudinal edge (9) of the post (7) from the inner part of the post (7) towards the outer part thereof,
- each end (6) comprises a curved section (11) formed by a first portion (12) and a second portion (13) both attached to each other, where the first portion (12) is an extension of the arm (2) and the second portion (13) comprises, in its final end, a curl-shaped curved portion,
where the fork (1) is configured to be placed inside the post (7), such that in a closing position of the fork (1) and, therefore, of the guide threads, the arms (2) of the fork (1) are housed inside of the post (7).

2. A fork (1) according to claim 1, **characterized in that** the value of µ ranges from 20 to 25 degrees.

3. A fork (1) according to claim 1, **characterized in that** the first portion (12) forms an α angle with respect to the arm (2), α being a value ranging from 75 to 85 degrees.

4. A fork (1) according to claim 1, **characterized in that** the central body (3) is contained in a plane and the arms (2) are separated with respect to this plane at an δ angle with a value ranging from 5 to 10 degrees.

5. A fork (1) according to claim 1, **characterized in that** the value of ß ranges from 94 to 98 degrees.

6. A fork (1) according to claim 1, **characterized in that** the core (5) comprises two straight sections (10) forming a V, and the inner angle φ formed between the wing (4) and one of the straight sections (10) of the core (5) has a value ranging from 123 to 127 degrees.

7. A fork (1) according to claims 2, 3, 4, 5 and 6, **characterized in that** µ equals 25 degrees, α equals 80 degrees, ß equals 96 degrees, δ equals 5 degrees and φ equals 125 degrees.

8. A fork (1) according to claim 1, **characterized in that**, once it is placed inside of the post (7), the fork (1) is configured to be displaced upwards and downwards by pulling the ends (6) of the arms (2) and pushing manually.

9. A fork (1) according to claim 1, **characterized in that** the length of the two wings (4) is not the same.

10. A fork (1) according to claim 1, **characterized in that** the length of the two wings (4) is the same.

11. A fork (1) according to claim 1, **characterized in that** the fork (1) is manufactured with a single rod made of rigid material.

12. A fork (1) according to claim 11, **characterized in that** the fork (1) is made of steel.

13. A fork (1)-post (7) assembly, **characterized in that** it comprises the fork (1) described in any of claims 1 to 12 and a post (7).

14. A fork (1)-post (7) assembly according to claim 13, **characterized in that** the post (7) is a hollow post (7), with a general C shape, made of formed metallic sheet composed of several longitudinal folds (8) and without orifices distributed in its surface.
